# EUROPÄISCHE PATENTSCHRIFT

(11) **EP 0 598 706 B1**
(45) Veröffentlichungstag und Bekanntmachung des Hinweises auf die Patenterteilung: **12.04.1995**
(21) Anmeldenummer: 94102009.1
(22) Anmeldetag: 10.02.1994
(51) Int. Cl.: B60K 37/02, B60Q 3/04

(54) **Kennzeichnungsfolie für Armaturen-Frontplatten**
Indicator cover panel for dashboards
Tableau de bord, comprenant face avant formé d'un film pourvu de symboles

(30) Priorität: 11.08.1993 DE 9311962 U
(43) Veröffentlichungstag der Anmeldung: 25.05.1994
(73) Patentinhaber: BÖ-LA SIEBDRUCKTECHNIK GmbH, 42477 Radevormwald (DE)
(72) Erfinder: Lahme, Karl-Heinrich, D-42477 Radevormwald (DE)
(74) Vertreter: Patentanwälte Dr. Solf & Zapf

(56) Entgegenhaltungen:
- EP-A- 0 505 221
- FR-A- 2 566 954
- GB-A- 2 190 780

## Beschreibung

Die vorliegende Erfindung betrifft eine Kennzeichnungsfolie für Frontplatten insbesondere von Kfz-Armaturen, bestehend aus einem Folienblatt aus einem transparenten, vorzugsweise thermoplastischen Kunststoff, insbesondere Polycarbonat (PC), mit einer auf der mit der Frontplatte zu verbindenden Folienfläche aufgebrachten, lichtdichten Abdeckbeschichtung sowie mit aus der Abdeckbeschichtung im Bereich von Lichtdurchtrittsöffnungen der Frontplatte insbesondere in Form von Kennzeichnungssymbolen ausgesparten Transparenzbereichen.

Es ist bekannt, derartige Kennzeichnungsfolien stoffschlüssig auf Frontplatten aufzubringen, indem die Folie in einem Spritzwerkzeug mit Kunststoffmaterial, insbesondere Polycarbonat (PC), hinterspritzt wird. Dabei werden jeweils dort, wo auf der Kennzeichnungsfolie die gegebenenfalls farbig durchscheinend hinterlegten (insbesondere bedruckten) Transparenzbereiche durch Aussparen aus der üblicherweise aufgedruckten Abdeckbeschichtung sowie insbesondere in der Form von alphanumerischen und/oder piktographischen Kennzeichnungssymbolen gebildet sind, mit Werkzeugstempeln die Lichtdurchtrittsöffnungen gebildet (freigespart). Da das Material des Folienblattes grundsätzlich transparent (matt lichtdurchlässig) ist, und da erfahrungsgemäß oftmals geringfügige Farbtonunterschiede zwischen dem Kunststoffmaterial der Frontplatte und dem Beschichtungsmaterial (üblicherweise Siebdruckfarbe) der Abdeckbeschichtung auftreten, ist bei den bekannten Kennzeichnungsfolien zur Vermeidung von sichtbaren Farbunterschieden zwischen der Abdeckbeschichtung und dem Material der Frontplatte (sogenannte "Farbtreppen") vorgesehen, daß sich die Abdeckbeschichtung über die gesamte von der Vorderseite der Frontplatte her in deren fertig montiertem Zustand sichtbare Fläche erstreckt, so daß für den Betrachter ausschließlich der gewünschte, praktisch farbnuancenfreie Farbton der Abdeckbeschichtung erkennbar ist. Aufgrund dieser vollflächigen Abdeckbeschichtung ist aber - um eine stoffschlüssige Haftung mit dem Material der Frontplatte zu erreichen - ein Haftvermittler (Primer) erforderlich, der als zusätzliche Schicht vollflächig auf die der Frontplatte zugekehrte Folien-Rückseite, d.h. auf die Abdeckbeschichtung, aufgebracht wird.

In der Praxis hat sich nun aber der Nachteil herausgestellt, daß es vor allem bei höheren Umgebungstemperaturen bzw. bei großen Temperaturunterschieden zu Haftungsproblemen zwischen der Kennzeichnungsfolie und der Frontplatte kommt. Dies bedeutet, daß sich die Folie unter bestimmten Umständen zumindest bereichsweise vom Material der Frontplatte ablöst. Hieraus resultiert ein äußerst unschönes Aussehen des jeweiligen Armaturenteils.

Der Erfindung liegt daher die Aufgabe zugrunde, eine Kennzeichnungsfolie der gattungsgemäßen Art zu schaffen, die derart fest und dauerhaft mit einer Frontplatte verbindbar ist, daß das ästhetische Erscheinungsbild der fertigen Frontplatte über einen langen Zeitraum hinweg optimal erhalten bleibt. Dabei sollen insbesondere auch weiterhin sogenannte "Farbtreppen" vermieden werden.

Erfindungsgemäß wird dies dadurch erreicht, daß die Abdeckbeschichtung sich im wesentlichen nur über die Bereiche der Lichtdurchtrittsöffnungen diese randlich überdeckend erstreckt, und daß von der übrigen, die Abdeckbeschichtung umgebenden Folienfläche zumindest 25% unbeschichtet ist, so daß das Folienblatt unmittelbar materialschlüssig mit der Frontplatte verbindbar ist.

Somit wird durch die Erfindung vorteilhafterweise erreicht, daß in den beschichtungsfreien, zweckmäßigerweise gleichmäßig über die die - erfindungsgemäß hinsichtlich ihrer Flächengröße minimierte - Abdeckbeschichtung umgebende Folienfläche verteilten Zonen beim Hinterspritzen ein materialeinheitlicher Verbund zwischen dem Kunststoffmaterial (insbesondere PC) der Frontplatte und dem Material (insbesondere ebenfalls PC) des Folienblattes möglich ist; es handelt sich somit um einen thermoplastischen Verbund, d.h. praktisch um eine Art "Verschweißen". Diese unmittelbar materialschlüssige Verbindung führt somit im Prinzip sogar zu einer Einstückigkeit der Folie mit der Frontplatte, so daß ein späteres Ablösen der Folie von der Frontplatte praktisch ausgeschlossen ist, und zwar vorteilhafterweise unabhängig von den Umgebungsbedingungen, wie Temperatur, (Luft-) Feuchtigkeit oder dergleichen.

Die erfindungsgemäße Minimierung der Flächengröße der Abdeckbeschichtung führt nun dazu, daß grundsätzlich das Material der Frontplatte in den beschichtungsfreien Zonen des Folienblattes durch dieses hindurch sichtbar ist. Um hier nun "Farbtreppen" zu vermeiden, ist in einer ersten Ausführungsform der Erfindung vorgesehen, daß die die Abdeckbeschichtung umgebende Folienfläche einen mit dem gleichen Material wie die Abdeckbeschichtung aufgebrachten Punkteraster aufweist. Somit ist die die eigentliche Abdeckbeschichtung umgebende Folienfläche zu einem bestimmten Prozentsatz ebenfalls lichtdicht mit demselben Beschichtungsmaterial beschichtet, wobei aufgrund der Ausbildung als Punkteraster eine äußerst gleichmäßige Flächenverteilung erreicht wird, so daß über die beschichtungsfreie Fläche zwischen den Punkten des Punkterasters die angestrebte materialschlüssige Verbindung mit der Frontplatte erreichbar ist. Der Punkteraster ist erfindungsgemäß mit einer derartigen Flächendeckung (abhängig von Punktdichte und Punktgröße) aufgebracht, daß im mit der Frontplatte fertig verbundenen Zustand die Abdeckbeschichtung und die übrige Folienfläche - unabhängig vom tatsächlichen Farbton des Materials der Frontplatte - einen einheitlichen, nämlich den jeweils gewünschten, Farbton aufweisen. Durch den erfindungsgemäßen Punkteraster wird folglich vorteilhafterweise eine Farbtonangleichung zwischen der Abdeckbeschichtung und der übrigen, angrenzenden Fläche der fertigen Frontplatte erreicht, was insofern einen "überraschenden Effekt" darstellt, als ja ein Teil der Fläche des Punkterasters unbeschichtet ist, so daß hätte erwartet werden können, daß hier grundsätzlich das Material der Frontplatte und damit auch deren üblicherweise geringfügig von der Abdeckbeschichtung abweichender Farbton sichtbar ist. Es wurde aber erkannt, daß ab einer bestimmten, vom jeweils gewünschten Farbton abhängigen Flächendeckung des Punkterasters nur noch genau der identische Farbton der Abdeckbeschichtung und des Punkterasters einheitlich erscheint, nicht aber der abweichende Farbton der Frontplatte. In der Praxis liegt die Flächendeckung des Punkterasters - bezogen (nur) auf den mit dem Punkteraster versehenen Bereich der außerhalb der Abdeckbeschichtung liegenden Folienfläche - im Bereich von etwa 25% bis 75%, insbesondere bei etwa 50%. Hierbei ist eine - den Abstand von Punktmitte zu Punktmitte definierende - Dichte im Bereich von 12 bis 36 Punkten pro Zentimeter (linear) vorteilhaft, was bezogen auf die Fläche etwa 140 bis etwa 1300 Punkten pro Quadratzentimeter entspricht. Die Flächendeckung resultiert dann - bei vorgegebener Dichte - aus der Größe der einzelnen Punkte.

In einer zweiten Ausführungsform der erfindungsgemäßen Kennzeichnungsfolie ist das Folienblatt im Bereich der die Abdeckbeschichtung umgebenden Folienfläche überwiegend, insbesondere vollständig unbeschichtet, wobei die Abdeckbeschichtung insbesondere mit einer der Frontplatte entsprechenden schwarzen Farbe aufgebracht ist. Diese erfindungsgemäße Ausführungsform beruht auf der Erkenntnis, daß im Falle einer grundsätzlich schwarzen Frontplatte relativ einfach eine Farbidentität zwischen dem Material der Frontplatte und der Abdeckbeschichtung erreicht werden kann, so daß "Farbtreppen" auch ohne jegliche Beschichtung im Bereich der die Abdeckbeschichtung umgebenden Folienfläche vermeidbar sind.

Diese zweite Ausführungsform eignet sich daher vor allem für die gewünschte Farbe "schwarz", könnte aber eventuell auch für andere Farbtöne geeignet sein, bei denen eine Farbgleichheit zwischen Frontplatte und Abdeckbeschichtung grundsätzlich erreichbar ist.

Die oben erläuterte erste Ausführungsform mit Punkteraster eignet sich demgegenüber grundsätzlich für alle Farbtöne, d.h. auch für solche Farbtöne, wie beispielsweise "Lavendel", bei denen es zu Farbabweichungen zwischen der Frontplatte und der Abdeckbeschichtung kommt bzw. kommen könnte.

Die erfindungsgemäße Kennzeichnungsfolie ist im Vergleich zum Stand der Technik auch wesentlich preiswerter herzustellen. Denn es braucht lediglich in einem Arbeitsgang die Abdeckbeschichtung und gegebenenfalls gleichzeitig der Punkteraster aufgebracht zu werden, was vorzugsweise im Siebdruckverfahren erfolgt. Eventuell werden nachfolgend noch die Transparenzbereiche zumindest teilweise farbig durchscheinend beschichtet, ebenfalls insbesondere im Siebdruckverfahren. Danach ist die Kennzeichnungsfolie - abgesehen von eventuellen Ausstanzungen - bereits fertig, d.h. es erübrigt sich ein zusätzliches Aufbringen eines Haftvermittlers oder dergleichen.

Weitere vorteilhafte Ausgestaltungsmerkmale der Erfindung sind in Unteransprüchen sowie in der folgenden Beschreibung enthalten.

Anhand von zwei in der Zeichnung veranschaulichten, bevorzugten Ausführungsbeispielen soll die Erfindung im folgenden näher erläutert werden. Dabei zeigen:
- Fig. 1: eine Draufsicht auf die Vorderseite einer ersten Ausführungsform der erfindungsgemäßen Kennzeichnungsfolie und
- Fig. 2: eine Draufsicht auf die Vorderseite der Kennzeichnungsfolie in einer zweiten Ausführungsform.

In den verschiedenen Figuren der Zeichnung sind gleiche Teile stets mit den gleichen Bezugszeichen versehen, so daß jede eventuell nur einmal vorkommende Beschreibung eines Teils analog auch bezüglich der jeweils anderen Zeichnungsfigur gilt, in denen dieses Teil mit dem entsprechenden Bezugszeichen ebenfalls zu erkennen ist.

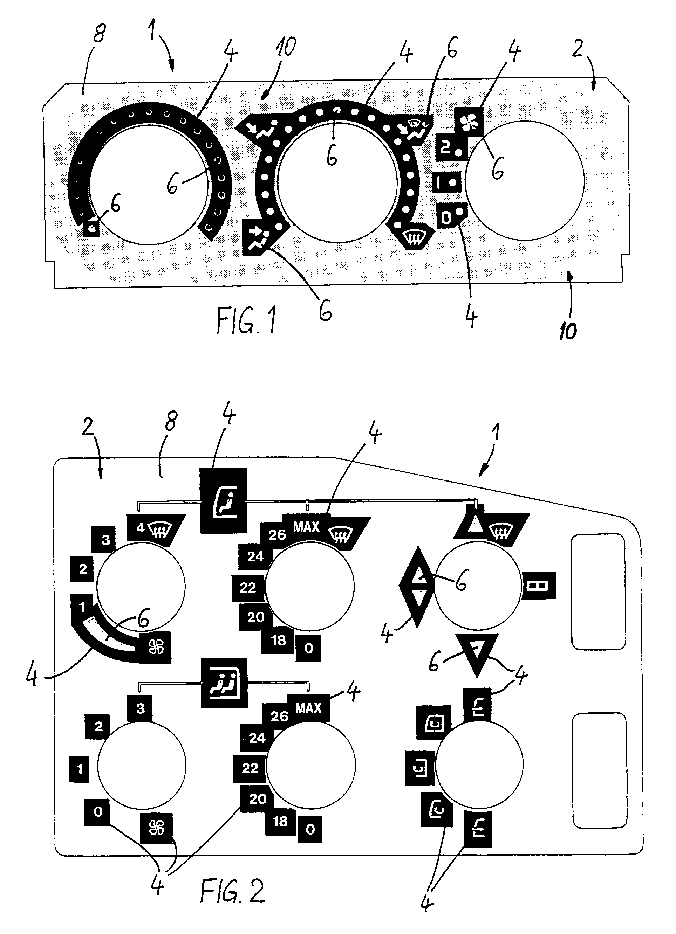

Wie sich zunächst aus Fig. 1 ergibt, besteht eine erfindungsgemäße Kennzeichnungsfolie 1 aus einem Folienblatt 2 aus einem transparenten, vorzugsweise thermoplastischen Kunststoff, insbesondere Polycarbonat (PC). Das Folienblatt 2 weist auf seiner mit einer nicht dargestellten Frontplatte zu verbindenden Folienfläche, d.h. auf der dem Betrachter der Zeichnungsfiguren abgekehrten Rückseite, eine vorzugsweise im Siebdruckverfahren aufgebrachte, lichtdichte Abdeckbeschichtung 4 auf, aus der im Bereich von Lichtdurchtrittsöffnungen der Frontplatte Transparenzbereiche 6 ausgespart sind. Diese Transparenzbereiche 6 haben insbesondere die Form von alphanumerischen, graphischen und/oder piktographischen Kennzeichnungssymbolen und dienen daher zur Kennzeichnung von Funktionsstellungen bestimmter Schalter- oder Anzeigearmaturen. Die mit der Kennzeichnungsfolie 1 ausgestattete Frontplatte wird von ihrer Rückseite her derart mit Licht bestrahlt, daß von der Vorderseite her für einen Betrachter aufgrund der Abdeckbeschichtung nur die Transparenzbereiche 6 durchleuchtend erscheinen. Die Transparenzbereiche 6 können dabei farbig durchscheinend beschichtet sein.

Erfindungsgemäß erstreckt sich nun die Abdeckbeschichtung 4 im wesentlichen nur über die den Flächenbereichen der Lichtdurchtrittsöffnungen entsprechenden Bereiche derart, daß im mit der Frontplatte verbundenen Zustand die Lichtdurchtrittsöffnungen gerade randlich überdeckt werden. Hierdurch ist im die Abdeckbeschichtung 4 umgebenden Bereich eine Folienfläche 8 gebildet, die erfindungsgemäß zumindest zu 25%, insbesondere zu etwa 40% bis 50% unbeschichtet ist. Das Folienblatt 2 ist hierdurch erfindungsgemäß unmittelbar materialschlüssig mit der Frontplatte verbindbar.

Im Falle der in Fig. 1 veranschaulichten ersten Ausführungsform der Erfindung weist die die Abdeckbeschichtung 4 umgebende Folienfläche 8 einen mit dem gleichen Material wie die Abdeckbeschichtung 4 aufgebrachten Punkteraster 10 auf. Dieser Punkteraster 10 erstreckt sich jedenfalls zumindest über den Flächenbereich der Folienfläche 8, der später auch von einem Betrachter der fertig montierten Frontplatte sichtbar ist, d.h. der nicht durch andere Armaturenteile abgedeckt ist. Durch den Punkteraster 10 wird erfindungsgemäß einerseits eine sehr gute materialeinheitliche Verbindung zwischen dem Folienblatt 2 und dem Material der Frontplatte in den jeweils unbeschichteten, äußerst gleichmäßig über die Fläche verteilten Zonen erreicht, und andererseits bewirkt der Punkteraster 10 vorteilhafterweise auch eine Farbtonangleichung zwischen den Bereichen der Abdeckbeschichtung 4 und der durchscheinenden Farbe der Frontplatte.

Beide erfindungsgemäßen Wirkungen sind optimal, wenn der Punkteraster 10 eine Dichte im Bereich von 12 bis 36 Punkten pro Zentimeter, d.h. von etwa 140 bis etwa 1300 Punkten pro Quadratzentimeter aufweist. Die in Verbindung mit der Dichte für die Flächendeckung maßgebliche Punktgröße ist hierbei so gewählt, daß die Flächendeckung insgesamt einen solchen Prozentsatz der Folienfläche 8 abdeckt, daß im mit der Frontplatte fertig verbundenen Zustand die Abdeckbeschichtung 4 und die übrige Folienfläche 8 - unabhängig vom tatsächlichen Farbton des Materials der Frontplatte - für einen Betrachter ohne erkennbaren Unterschied in demselben Farbton erscheinen. Vorzugsweise liegt die Flächendeckung des Punkterasters 10 im Bereich von etwa 25% bis 75%, insbesondere bei etwa 50%.

Bei der Ausführung nach Fig. 2 ist das Folienblatt 2 im Bereich der die Abdeckbeschichtung 4 umgebenden Folienfläche 8 völlig unbeschichtet. Hierbei ist die Abdeckbeschichtung 4 insbesondere mit einer der Frontplatte entsprechenden schwarzen Farbe aufgebracht. Es wurde erkannt, daß bei einer schwarzen Farbe auch ohne Punkteraster 10 eine Farbtongleichheit zwischen der Abdeckbeschichtung 4 und dem durch die übrige Folienfläche 8 scheinenden Material der Frontplatte erreicht werden kann.

Vorzugsweise sind die Abdeckbeschichtung 4 und - im Falle der Fig. 1 - der Punkteraster 10 als Aufdruck, insbesondere als Siebdruck, auf die Rückseite des Folienblattes 2 aufgebracht. Danach kann gegebenenfalls zumindest ein Teil der Transparenzbereiche 6 farbig durchscheinend beschichtet, insbesondere ebenfalls bedruckt (Siebdruck) sein.

Die erfindungsgemäße Kennzeichnungsfolie 1 ist sehr einfach und preiswert herstellbar. Auf das Folienblatt 2 wird zunächst rückseitig in einem Arbeitsgang und vorzugsweise im Siebdruckverfahren die Abdeckbeschichtung 4 gegebenenfalls unmittelbar zusammen mit dem Punkteraster 10 aufgebracht, wobei gleichzeitig natürlich auch die Transparenzbereiche 6 durch Aussparen gebildet werden. Danach können eventuell die Transparenzbereiche 6 farbig beschichtet, insbesondere bedruckt werden. Nach eventuellen Ausstanzarbeiten ist die Kennzeichnungsfolie 1 bereits unmittelbar fertiggestellt. Sie kann dann in ein Kunststoff-Spritzgußwerkzeug eingelegt und zur Bildung der Frontplatte mit Kunststoffmaterial hinterspritzt werden, wobei durch die erfindungsgemäßen, unbeschichteten Bereiche der Folienfläche 8 eine außerordentlich dauerhafte, unmittelbar materialschlüssige Verbindung zwischen der Kennzeichnungsfolie 1 und der Frontplatte erreicht wird. Es handelt sich hier um einen thermoplastischen, materialeinheitlichen Verbund.

## Patentansprüche

1. Kennzeichnungsfolie (1) für Frontplatten, insbesondere von Kfz-Armaturen, bestehend aus einem Folienblatt (2) aus einem transparenten, vorzugsweise thermoplastischen Kunststoff, insbesondere Polycarbonat (PC), mit einer auf der mit der Frontplatte zu verbindenden Folienfläche aufgebrachten, lichtdichten Abdeckbeschichtung (4) sowie mit aus der Abdeckbeschichtung (4) im Bereich von Lichtdurchtrittsöffnungen der Frontplatte insbesondere in Form von Kennzeichnungssymbolen ausgesparten Transparenzbereichen (6),
**dadurch gekennzeichnet,** daß die Abdeckbeschichtung (4) sich im wesentlichen nur über die Bereiche der Lichtdurchtrittsöffnungen diese randlich überdeckend erstreckt, und daß von der übrigen, die Abdeckbeschichtung (4) umgebenden Folienfläche (8) zumindest 25% unbeschichtet ist, so daß das Folienblatt (2) unmittelbar materialschlüssig mit der Frontplatte verbindbar ist.

2. Kennzeichnungsfolie nach Anspruch 1,
**dadurch gekennzeichnet,** daß die die Abdeckbeschichtung (4) umgebende Folienfläche (8) einen mit dem gleichen Material wie die Abdeckbeschichtung (4) aufgebrachten Punkteraster (10) aufweist.

3. Kennzeichnungsfolie nach Anspruch 2,
**dadurch gekennzeichnet,** daß der Punkteraster (10) eine Dichte von 12 bis 36 Punkten pro Zentimeter, d.h. von etwa 140 bis etwa 1.300 Punkten pro Quadrat-Zentimeter, aufweist.

4. Kennzeichnungsfolie nach Anspruch 2 oder 3,
**dadurch gekennzeichnet,** daß der Punkteraster (10) eine in Abhängigkeit vom gewünschten Farbton der fertigen Frontplatte derart gewählte Flächendeckung aufweist, daß im mit der Frontplatte fertig verbundenen Zustand die Abdeckbeschichtung (4) und die übrige Folienfläche (8) - unabhängig vom tatsächlichen Farbton des Materials der Frontplatte - einen einheitlichen Farbton aufweisen.

5. Kennzeichnungsfolie nach Anspruch 4,
**dadurch gekennzeichnet,** daß die Flächendeckung des Punkterasters (10) im Bereich von etwa 25% bis 75%, insbesondere etwa 50%, liegt.

6. Kennzeichnungsfolie nach Anspruch 1,
**dadurch gekennzeichnet,** daß das Folienblatt (2) im Bereich der die Abdeckbeschichtung (4) umgebenden Folienfläche (8) überwiegend, insbesondere völlig, unbeschichtet ist, wobei die Abdeckbeschichtung (4) insbesondere mit einer der Frontplatte entsprechenden, schwarzen Farbe aufgebracht ist.

7. Kennzeichnungsfolie nach einem oder mehreren der Ansprüche 1 bis 6,
**dadurch gekennzeichnet,** daß die Abdeckbeschichtung (4) des Folienblattes (2) und gegebenenfalls der Punkteraster (10) als Aufdruck, insbesondere als Siebdruck, ausgebildet ist/sind.

8. Kennzeichnungsfolie nach einem oder mehreren der Ansprüche 1 bis 7,
**dadurch gekennzeichnet,** daß zumindest ein Teil der Transparenzbereiche (6) farbig durchscheinend beschichtet, inbesondere bedruckt ist.

## Claims

1. Labelling foil (1) for front panels, in particular of motor vehicle dashboards, comprising a foil sheet (2) made of a transparent, preferably thermoplastic synthetic material, in particular polycarbonate (PC), having a light-proof cover coating (4) which is applied to the foil surface to be connected to the front panel, and having transparent regions (6) cut out of the cover coating (4) in the region of light passage openings in the front panel, in particular in the form of labelling symbols, characterized in that the cover coating (4) extends substantially only over the regions of the light passage openings, covering the latter at their margins, and in that at least 25% of the remaining foil surface (8) surrounding the cover coating (4) is uncoated, so that the foil sheet (2) can be directly materially connected to the front panel.

2. Labelling foil according to Claim 1, characterized in that the foil surface (8) surrounding the cover coating (4) has a dot screen (10) applied with the same material as the cover coating (4).

3. Labelling foil according to Claim 2, characterized in that the dot screen (10) has a density of 12 to 36 dots per centimetre, that is to say from approximately 140 to approximately 1,300 dots per square centimetre.

4. Labelling foil according to Claim 2 or 3, characterized in that the dot screen (10) has a surface coverage which is selected in dependence on the desired shade of the finished front panel in such a way that, in the state when connection to the front panel is complete, the cover coating (4) and the rest of the foil surface (8) - regardless of the actual shade of the material of the front panel - have a uniform shade.

5. Labelling foil according to Claim 4, characterized in that the surface coverage of the dot screen (10) is in the range approximately 25% to 75%, in particular approximately 50%.

6. Labelling foil according to Claim 1, characterized in that the foil sheet (2) is predominantly, in particular entirely, uncoated in the region of the foil surface (8) surrounding the cover coating (4), the cover coating (4) being applied in particular in a black colour corresponding to the front panel.

7. Labelling foil according to one or more of Claims 1 to 6, characterized in that the cover coating (4) of the foil sheet (2), and if appropriate the dot screen (10), is/are in the form of a print, in particular a screen print.

8. Labelling foil according to one or more of Claims 1 to 7, characterized in that at least some of the transparent regions (6) are coated with a translucent colour, in particular are printed.

## Revendications

1. Feuille indicatrice (1) pour panneau frontal, en particulier de tableaux de bord de véhicule automobile, consistant en un feuillet (2) réalisé en un matériau synthétique transparent, de préférence thermoplastique, en particulier du polycarbonate (PC), présentant une couche de recouvrement (4) opaque montée sur la surface de feuille à fixer sur le panneau frontal, ainsi que des zones transparentes (6) évidées dans la couche de recouvrement (4) dans la zone des ouvertures de passage de la lumière du panneau frontal, en particulier sous la forme de symboles indicateurs,
caractérisée en ce que la couche de recouvrement (4) ne s'étend essentiellement que sur les zones des ouvertures de passage de la lumière en les recouvrant sur leur bord, et en ce que, du restant de la surface (8) de la feuille entourant la couche de recouvrement (4), au moins 25% est non revêtue, de sorte que le feuillet (2) peut être directement fixé sur le panneau frontal par liaison de matière.

2. Feuille indicatrice selon la revendication 1, caractérisée en ce que la surface (8) de la feuille entourant le couche de recouvrement (4) présente un réseau de points (10) réalisé avec le même matériau que la couche de recouvrement.

3. Feuille indicatrice selon la revendication 2, caractérisée en ce que le réseau de points (10) présente une densité de 12 à 36 points par centimètre, c'est-à-dire d'environ 140 à environ 1 300 points par centimètre carré.

4. Feuille indicatrice selon la revendication 2 ou la revendication 3, caractérisée en ce que le réseau de points (10) présente une couverture de surface choisie en fonction de la nuance de couleur souhaitée du panneau frontal fini, de telle sorte que dans l'état où le panneau frontal est définitivement fixé, la couche de recouvrement (4) et la surface (8) de feuille restante présente une nuance de couleur uniforme - indépendante de la nuance de couleur véritable du matériau du panneau frontal.

5. Feuille indicatrice selon la revendication 4, caractérisée en ce que la couverture de surface du réseau de points (10) se situe dans le domaine d'environ 25% à 75%, en particulier environ 50%.

6. Feuille indicatrice selon la revendication 1, caractérisée en ce que le feuillet (2), dans la zone de la surface (8) de feuille entourant la couche de recouvrement (4) est principalement, en particulier totalement, non revêtu, la couche de recouvrement (4) étant en particulier réalisée avec une couleur noire correspondant au panneau frontal.

7. Feuille indicatrice selon une ou plusieurs des revendications 1 à 6, caractérisée en ce que la couche de recouvrement (4) du feuillet (2) et éventuellement le réseau de points (10) est/sont formée(s) par impression, en particulier par sérigraphie.

8. Feuille indicatrice selon une ou plusieurs des revendications 1 à 7, caractérisée en ce qu'au moins une partie de la zone transparante (6) est revêtue, en particulier imprimée, avec une couche colorée translucide.
